# EUROPEAN PATENT SPECIFICATION

(11) **EP 3 030 121 B1**
(45) Date of publication and mention of the grant of the patent: **09.10.2019**
(21) Application number: 14756105.4
(22) Date of filing: 06.08.2014
(51) Int. Cl.: A47J 43/07

(54) **FOOD PREPARATION EQUIPMENT**
VORRICHTUNG ZUR SPEISENZUBEREITUNG
ÉQUIPEMENT DE PRÉPARATION D'ALIMENTS

(30) Priority: 06.08.2013 GB 201314007
(43) Date of publication of application: 15.06.2016
(73) Proprietor: Kenwood Limited, Havant, Hampshire PO9 2NH (GB)
(72) Inventor: SHANMUGAM, Sivaprakash, Havant, Hampshire PO9 2NH (GB)
(74) Representative: Hector, Annabel Mary
(86) International application number: PCT/GB2014/052418
(87) International publication number: WO 2015/019095

(56) References cited:
- EP-A1- 0 499 062
- EP-A2- 2 225 981
- US-A1- 2008 253 224

## Description

This invention relates to food preparation equipment, and it relates more especially to such equipment for performing tasks involving heating or cooking ingredients in accordance with specific techniques, such as the sous-vide technique.

Interest in home cooking is currently increasing significantly; this interest being fuelled by several factors, including the desire for healthy eating, the ever-expanding palate for different foodstuffs and the plethora of television programmes featuring celebrity chefs.

However, some of the more specialised cooking techniques, as practiced by celebrity chefs or in commercial kitchens, are carried out using special-purpose or dedicated equipment, and there are many factors which militate against the acquisition and use of such equipment for use in the home, where the equipment would likely be stored for relatively long periods between successive usages. Some of these factors are of course based purely on cost, as the acquisition of dedicated equipment, for various cooking procedures is expensive, particularly when it is considered that such equipment is unlikely to be used on a regular basis.

There are also environmental concerns about the energy and resources used to manufacture and distribute equipment that may be rarely used, and still other problems include the need to store the various pieces of equipment whilst they are out of use, and, in particular, the storage space they require, bearing in mind that storage space is at a premium in most kitchens, particularly with the current trend towards smaller properties that are easier and cheaper to maintain and run. Such properties tend to have compact kitchens in which the storage of kitchen equipment can present considerably difficulties.

EP2225981 discloses an insert having mixing elements extending in a radial and axial manner.

This invention aims to address one or more of the above issues. According to one aspect, the invention provides an attachment for a heated stand mixer configured to temporarily adapt the stand mixer for performing sous-vide cooking, the attachment comprising coupling means whereby the attachment can be readily coupled to and removed from the stand mixer, wherein coupling means comprises a shaft and means for coupling the shaft to a driving head of the stand mixer so as to pick up rotational drive therefrom, the attachment further comprising one or more arms radiating outwardly from the region of said shaft, wherein the or each said radiating arm is configured to hold vacuum-packed foods to act as paddles for creating a stirring action. By this means, the stand mixer, which is already an extremely versatile kitchen appliance, may be provided with yet further capabilities, thus providing the user with the facility to perform a specialised cooking process which, as aforesaid, would otherwise require dedicated equipment.

Preferably, the attachment is of simple construction. Preferably also, the attachment is collapsible for easy and compact storage.

In some preferred embodiments of the invention, the shaft may be hollowed, and configured to fit closely over a depending pin forming part of the said driving head.

In some preferred embodiments of the invention, securing means are provided to ensure the reliable suspension of the attachment from said depending pin. In such embodiments, the hollowed shaft of the attachment may contain resilient means to fit tightly around and urge against the pin. In any event, the attachment is caused to rotate about its own longitudinal axis, which aligns with the axis of said depending pin.

In a particularly preferred embodiment, five radiating arms are provided. It is preferred that the radiating arms are shaped to follow the internal side-wall curvature of the bowl of the heated stand mixer, and that they meet at top and bottom of the attachment to form a closed loop.

It is further preferred that the radiating arms are each provided, near their lower ends, with a pair of partial side walls configured as pockets or racks to hold vacuum-packed foods. In such embodiments, the walls and the food packages stored therein act as paddles when the attachment rotates in a liquid held in the bowl, thereby creating a stirring action sufficient to maintain a substantially uniform temperature throughout the liquid.

In some embodiments of the invention, the food packages are held in place by clips, like clothes pegs, suspended from one or more arms radiating from the shaft. In such embodiments, the food packages themselves, when suspended from the arms, provide the paddle-like action necessary to stir the liquid in the bowl.

Preferably, the arms of the attachment are foldable, thereby providing an attachment that can easily be rendered compact for storage.

The attachment is preferably provided with a temperature sensor.

The bowl may be provided with a lid formed with a central opening to accommodate the drive connection to the attachment. Preferably, the lid is also formed with an offset opening through which water or another liquid may be added during operation of the stand mixer.

According to the invention from another aspect, there is provided in combination a stand mixer having: a base to support a bowl, an upright section and a head supported from the upright section and overlying the base, wherein the head carries a drive outlet facing down toward the base, and wherein the stand mixer is provided with means for heating contents of the bowl; and an attachment comprising a support member, drivable from the head and suspendable therefrom into the bowl, for carrying packaged foodstuffs to be cooked in liquid contained in the bowl, wherein the packaged foodstuff is effective, when the attachment is rotated, to stir the liquid in the bowl to maintain a desired temperature therein.

The invention also encompasses generically any stand mixer adapted to perform a specialist cooking process by means of an attachment temporarily attached thereto. By this means, the stand mixer acts as a host to at least one attachment that converts it temporarily into a specialist cooking processor.

According to another aspect, the invention provides an attachment for a heated stand mixer configured to temporarily adapt the stand mixer for performing specialist cooking/heating tasks such as sous-vide cooking.

The invention extends to methods and/or apparatus substantially as herein described with reference to the accompanying drawings.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In order that the invention may be clearly understood and readily carried into effect, embodiments thereof will now be described, by way of example only, with reference to the accompanying drawings, of which:
Figure 1(a) shows, in perspective view, a heated stand mixer fitted with an attachment in accordance with one embodiment of the invention;
Figure 1(b) shows a bowl for use with the stand mixer;
Figure 1(c) shows a lid for the bowl of Figure 1(b);
Figure 1(d) shows a detail of the drive outlet on the head of the stand mixer;
Figure 2 shows in more detail the attachment of Figure 1; and
Figure 3 shows an attachment in accordance with a second embodiment of the invention.

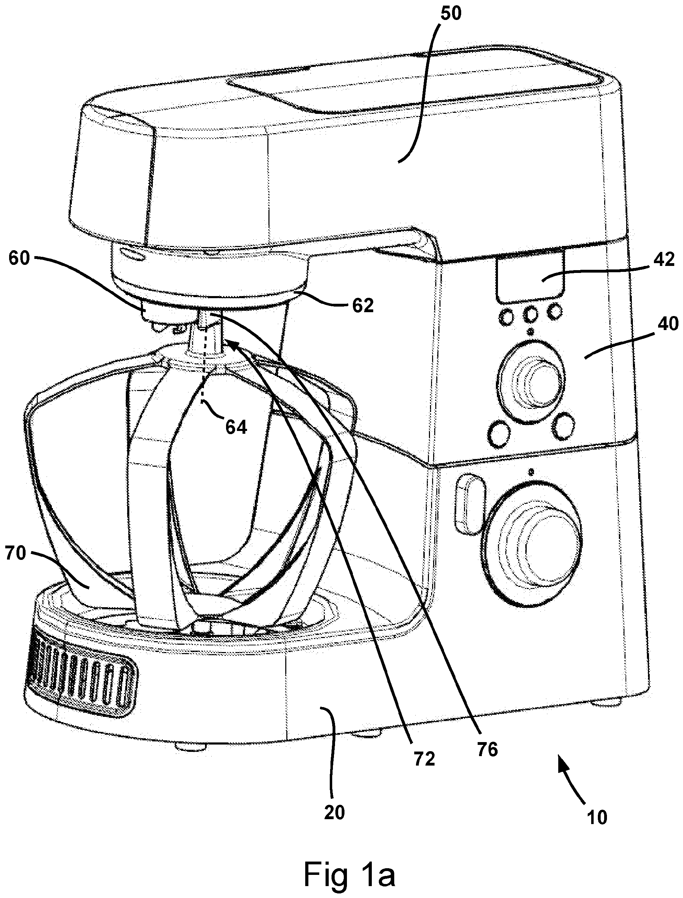

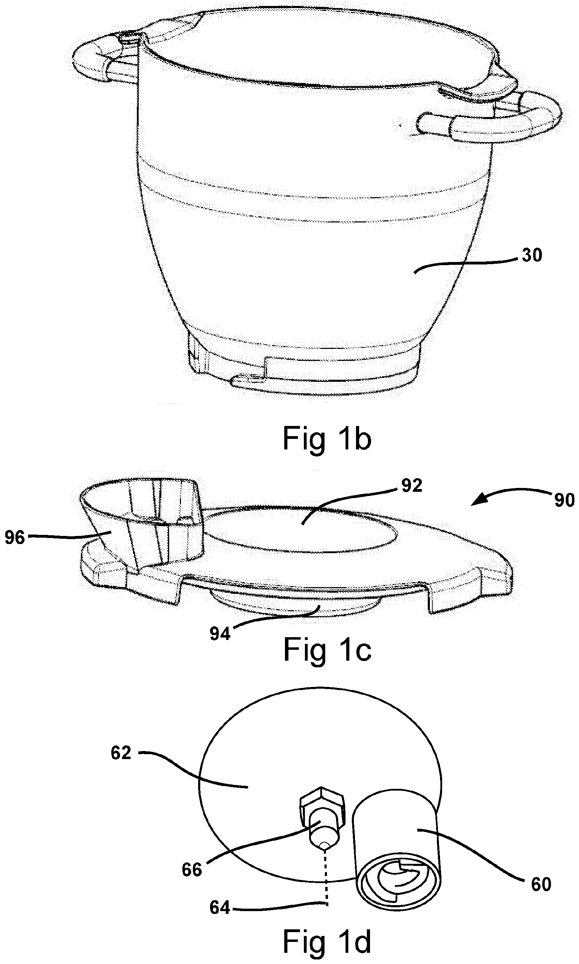

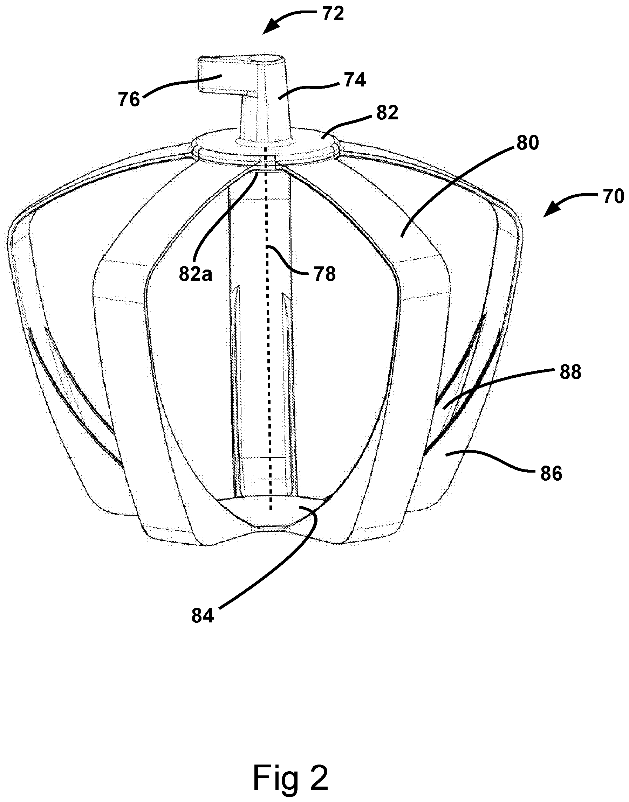

Referring now to Figures 1(a), 1(b), 1(c), 1(d) and 2, the heated stand mixer shown generally at 10 is a well-known and long-established piece of kitchen equipment.

Such mixers typically comprise a generally C-shaped casing which provides a pedestal-like support 20 for a mixing bowl 30, and a generally upright support portion 40 supporting a head unit 50 that extends, for operation, overhead of the bowl 30. The head unit 50 carries a downwardly-facing, motor-powered drive outlet 60 to which, for normal usage of the mixer 10, the shank of a kneading, whisking or other processing tool (not shown) is temporarily connected for use. The powered movement imparted to the shanked tool is conventionally planetary in nature, and the tool is suspended from the drive outlet 60 and reaches down into the bowl 30 to mix ingredients therein.

Stand mixers are versatile appliances, and typically provide, in addition to the aforementioned outlet 60 that drives the shanked mixing tool, at least one further drive outlet for driving attachments with different speed and/or torque requirements, and configured for performing other tasks. Typically, such additional drive outlets may be set up to drive the operating tool of a high speed food processor attachment, or a low-speed/high torque attachment, such as a mincer.

The stand mixer 10 also incorporates heating means (not shown, but usually accommodated within the base 20), enabling ingredients in the bowl 30 to be heated whilst being subjected to the mixing action. If the heating means is not incorporated into the stand mixer 10, it may alternatively be incorporated into the bowl 30, or it may be incorporated into a heating pad which is separate from both the bowl 30 and the stand mixer 10, but may be temporarily associated with them, for example by being interposed between the two, when required to perform a heating function. It is also possible to provide a distributed heating means comprising a combination of two or more of the above-mentioned arrangements. Moreover, as is known, the heating means may take any preferred form, such as inductive, conductive, or radiative, and may be provided by any convenient agency or method.

In any event, the degree of heating is selectable, allowing the ingredients to be completely cooked, partially cooked, or merely warmed, according to user requirements and/or the procedures dictated by individual recipes.

Typically, such heated stand mixers incorporate sophisticated temperature monitoring and control arrangements, for example such as those described and claimed in WO-A1-2009/103945, whereby the temperature of ingredients in the bowl 30 can be accurately controlled.

This embodiment of the invention provides an attachment 70 that can be fitted to the mixer 10 instead of the usual processing tool, in order to adapt the heated stand mixer 10 into a sous-vide cooking appliance. The attachment 70 in this example is used with the existing bowl 30 although, if preferred, a specially-configured bowl could be used instead.

In accordance with the sous-vide cooking technique, vacuum-sealed food is heated in a water bath at a relatively low temperature, for a relatively long time, and creates food that is tender, juicy and nutrient rich. Since the food is cooked slowly, and at a precise, relatively low temperature, the food is reliably cooked to the prescribed degree, both inside and out, and has a more intense flavour. The sous-vide method therefore yields results that are difficult to achieve by traditional means.

The principal requirement of sous-vide cooking is the controlled application of relatively low heat; just sufficient to cook the food properly, and no more. A pot of boiling water or a hot oven subjects food to a high temperature so that, by the time the centre of the food reaches the proper temperature, the outside may well be at least partly overcooked. If the cooking process is not timed with reasonable accuracy, meats can become dried and vegetables can become over-softened and mushy. However, if vacuum-packed food is heated in a bath of liquid (usually water) maintained at a precise predetermined temperature, it tends to be reliably and thoroughly cooked throughout.

The two pieces of equipment required for sous-vide cooking are thus a vacuum packing machine, to seal food tightly in a plastic bag; and a temperature-controlled bath of liquid; in this case, water. Vacuum-packed foods are commercially available, so the present invention primarily relates to the second of these pieces of equipment, and provides an attachment that temporarily converts a heated stand mixer into a sous-vide cooking appliance. The bowl of the stand mixer is used as the water bath, and the attachment is used to suspend the vacuum-packed food into the water for rotation therein (by means of the stand mixer's drive mechanism) to stir the water to ensure maintenance of an even temperature in the bowl 30.

The temperature is accurately monitored by the temperature monitoring and control system incorporated into the stand mixer 10 (e.g. the system described in the aforementioned WO-A1-2009/103945, which requires the use of a bowl having a multi-layered base, and spring-loaded probes respectively contacting specific layers of the bowl).

In this embodiment of the invention, the stand mixer 10 is configured with its planetary drive outlet socket 60 supported in a disc-shaped member 62 that rotates in a horizontal plane, relative to the head unit 50, about a vertical central axis 64. This axis 64 is also the central axis of the bowl 30. The disc-shaped member 62 is attached to the head 50 by means of a metallic pin 66 which extends vertically downwards from the head 50 along the central axis 64, as best seen in Figure 1(d).

Accordingly, in this example, the attachment 70 is fitted with an arrangement 72 designed to be readily attachable to and detachable from the pin 66 and formed with a hollow shaft 74 designed to closely fit over the pin 66 and a tab member 76 which bears against the planetary drive outlet socket 60 to rotate the attachment 70 about the axis 64.

If necessary, any convenient means may be utilised in order to ensure the reliable suspension of the attachment 70 from the pin 66. For example, the hollow shaft 74 may contain resilient means to fit tightly around and urge against the pin 66 and/or the shaft may be formed of, or sleeved with, a magnetic material. In any event, the attachment 70 thus indirectly picks up the rotational drive from the stand mixer's motor unit (not shown), and rotates, like a spindle about its own longitudinal axis 78, which aligns with the axis 64 of the vertical pin 66 and the bowl 30.

The attachment 70 is comprised of one or more outwardly radiating arms 80. In this embodiment, it is shown with five such radiating arms, although of course the number of arms used is not of the essence of the invention. The radiating arms 80 are shaped to follow the internal side-wall curvature of the bowl 30, and they are arranged to meet at top and bottom to form a closed loop. Accordingly, each radiating arm 80 is attached to both upper and lower disc members 82 and 84 respectively. The radiating arms 80 are each provided, near their lower ends, with a pair of partial side walls such as 86 and 88. These partial walls 86, 88 are configured effectively as pockets or racks to hold the vacuum-packed foods. The rack walls 86, 88 and the food packages stored therein act, when the attachment 70 is rotated in water held in the bowl 30, as paddles, creating a stirring action sufficient to maintain the required substantially uniform temperature within the water bath constituted by the bowl 30.

It is preferred to configure the attachment 70 so that its arms 80 are foldable, thereby providing an attachment that can easily be rendered compact for storage. The folding action provided in this embodiment requires all of the radiating arms 80 to be rotatable about the axis 78 of the attachment 70, thereby allowing them to be folded against one another, to one side of the attachment.

As mentioned above, the same bowl 30 that is normally used for various operations of the stand mixer 10, such as mixing, stirring, beating, folding, etc., acts in this example as the water bath for sous-vide cooking when used with the attachment 70. For operation, the bowl 30, as is conventional, is removably latched onto the pedestal 20 of the mixer 10 by any known means. Typically, as in the current embodiment, a bayonet latch is utilised. Subject to the need for the bowl 30 to co-operate with the temperature monitoring and control system of the mixer 10, it can be configured to various shapes and be made out of any food approved material. It will also be appreciated that the bowl could be made transparent, semi-transparent (translucent) or opaque.

In any event, it is desirable to provide a guarding device or partial lid 90 for the bowl 30 when using the attachment 70, in order to reduce unwanted egress of steam and/or to prevent the heat loss and/or to prevent ingredients being ejected from the bowl or other receptacle in which they are being heated and/or stirred. Preferably, the lid is provided with a central opening 92, surrounded by a downwardly-extending flange 94, to accommodate the connection of the attachment 70 to the mixer 10, and an opening, framed by an upwardly-extending lip, 96, through which water may be added, if necessary, during the sous-vide cooking process.

Although a single-piece lid 90 is used in this embodiment, a two-part lid assembly of the general kind described and claimed in WO-A1-2009/127866 may be employed if preferred.

It is preferred to provide a temperature sensor 82a adjacent the head of the attachment 70, and sited for example below the top disc 82. This arrangement facilitates accurate temperature control, either by providing a direct visual readout or by communicating the temperature remotely (via any convenient wireless transmission technique) to the stand mixer's temperature control electronics. The heated stand mixer 10 preferably also includes a programmable sous-vide cooking mode indication in its control panel 42, with associated controls enabling the user to select a predefined time and temperature program, and/or to adjust the time and temperature according to their needs.

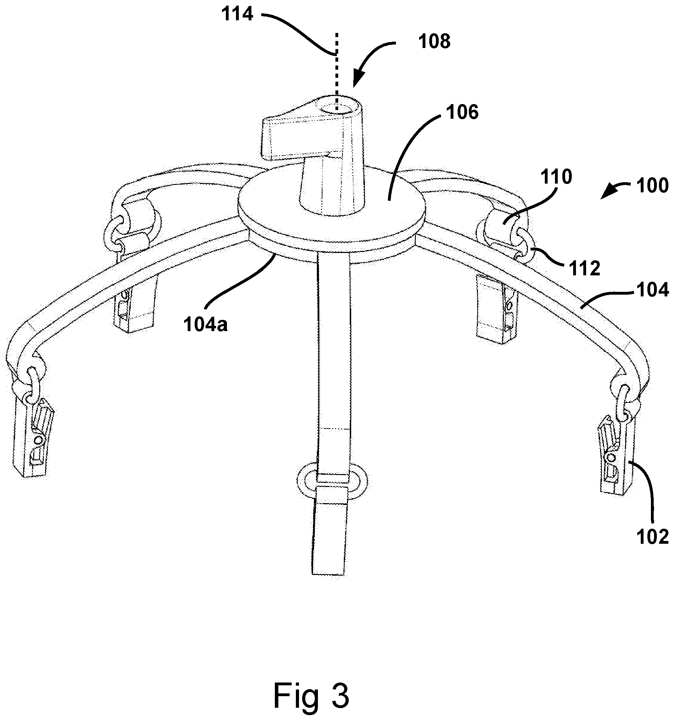

In a second embodiment of the invention, shown in Figure 3, the attachment 70 is replaced by an attachment 100, but all other features remain the same as in the first embodiment and will thus not be further described herein. The attachment 100 is configured differently from the attachment 70, in that the food packages are held in place by clips 102, like clothes pegs, suspended from one or more radiating arms 104 extending from a disc 106. The arrangement 108, by means of which the attachment 100 is attachable to and detachable from the pin 66 of the stand mixer 10 is identical to the arrangement 72 of the attachment 70.

At the end of each radiating arm 104 there is provided means such as an apertured component 110 and a ring 112 to suspend the respective clip 102. Since, in this embodiment, there are no permanent wall portions (such as 86 and 88 of the attachment 70) it will be appreciated that when, during sous-vide cooking, the tool 100 rotates, the food packages themselves, when suspended from the clips 102 at the ends of arms 104, provide the paddle-like action necessary to stir the water in the bowl 30, thereby to maintain the water temperature substantially uniform.

The radiating arms 104 are each preferably designed to be folded about the joint where it meets the disc 106 so that the arms can be collapsed towards the central axis 114 of the attachment 100, rather like an umbrella.

The attachment 100 is also preferably provided with a temperature sensor 104a located below the disc 104.

It will be appreciated that the shapes and configurations of the attachments shown are not limited to those illustrated herein, and that other shapes and configurations may be used without departing from the scope of the invention.

Some preferred embodiments of the invention further provide means permitting a user to vacuum pack the required foodstuffs in the kitchen by utilizing the aforementioned high speed drive outlet commonly found on stand mixers to create the necessary suction. Preferably, the high speed blender drive outlet is used to drive a separately provided vacuum pump for this purpose. Alternatively, a stand mixer designed with sous-vide cooking in mind could be provided with a new outlet point configured either for direct use as a suction port or as a bespoke drive for a vacuum pump. In either event, it will be appreciated that the stand mixer may also be provided with a means for sealing the plastic bag. In one example, the heating means available within the kitchen machine is adapted to seal the bag. It is also preferred to make provision on or in the stand mixer for storing the unused plastic bags.

It will be understood that the present invention has been described above purely by way of example, and modifications of detail can be made within the scope of the invention.

## Claims

1. An attachment (70) for a heated stand mixer (10) configured to temporarily adapt the stand mixer for performing sous-vide cooking, the attachment comprising coupling means (72) whereby the attachment (70) can be readily coupled to and removed from the stand mixer (10), wherein the coupling means (72) comprises a shaft (74) and means for coupling the shaft to a driving head (60) of the stand mixer (10) so as to pick up rotational drive therefrom, the attachment (70) further comprising one or more arms (80) radiating outwardly from the region of said shaft (74), wherein the or each said radiating arm (80) is configured to hold vacuum-packed foods to act as paddles thereby creating a stirring action.

2. An attachment according to claim 1, wherein the shaft (74) is hollowed, and configured to fit closely over a depending pin (66) forming part of the said driving head (60).

3. An attachment according to claim 2, wherein securing means are provided to ensure the reliable suspension of the attachment (70) from said depending pin (66).

4. An attachment according to claim 3, wherein said securing means includes resilient means provided in the hollowed shaft (74) of the attachment and constrained to fit tightly around and urge against the pin (66), said securing means preferably including magnetic material.

5. An attachment according to any of claims 1 to 4 comprising five said arms (80).

6. An attachment according to any of claims 1 to 5, wherein the said one or more radiating arms (80) is or are shaped to follow the internal side-wall curvature of a bowl (30) of the heated stand mixer, and meet at top and bottom of the attachment (70) to form a closed loop.

7. An attachment according to claim 6, wherein the or each said radiating arm (80) is provided, near its lower end, with a pair of partial side walls (86, 88) configured as pockets or racks to hold vacuum-packed foods, whereby the walls and the food packages stored therein act as paddles when the attachment (70) rotates in a liquid held in the bowl (30), thereby creating a stirring action sufficient to maintain a substantially uniform temperature throughout the liquid.

8. An attachment according to any of claims 1 to 5, wherein the end of the or each of said radiating arms (80) supports a respective depending clip (102), from which a food package can be suspended, whereby the food packages provide the paddle-like action necessary to stir the liquid in the bowl when the attachment (70) is rotated therein.

9. An attachment according to any of claims 1 to 8, wherein the arms (80) of the attachment are configured to be foldable, thereby providing an attachment (70) that can easily be rendered compact for storage.

10. An attachment according to any preceding claim further comprising a temperature sensor (82a).

11. A stand mixer (10) having: a bowl (30), a base (20) to support a bowl (30), an upright section (40) and a head (50) supported from the upright section (40) and overlying the base (20), wherein the head (50) carries a drive outlet (60) facing down toward the base (20), and wherein the stand mixer (10) is provided with means for heating contents of the bowl and an attachment (70) according to any preceding claim, comprising a support member (80), drivable from the head (50) and suspendable therefrom into the bowl (30), for carrying packaged foodstuffs to be cooked in liquid contained in the bowl (30), wherein the packaged foodstuff is effective, when the attachment (70) is rotated, to stir the liquid in the bowl (30) to maintain a desired temperature therein.

12. The stand mixer according to claim 11, wherein the bowl (30) is provided with a lid (90) formed with a central opening (92) to accommodate the drive connection to the attachment (70), and preferably wherein the lid is further formed with an offset opening through which water or another liquid may be added during operation of the stand mixer (10).

13. The stand mixer according to claim 11 or 12, further comprising a vacuum pump adapted to be driven from a high speed blender drive outlet provided on the mixer and configured to evacuate envelopes containing foodstuffs in preparation for sous-vide cooking.

14. The stand mixer according to claim 11 or 12, wherein the stand mixer presents an outlet configured either for direct use as a suction port or as a bespoke drive for a vacuum pump to evacuate envelopes containing foodstuffs in preparation for sous-vide cooking.

15. A heated stand mixer (10) comprising at least one attachment (70) according to any of claims 1 to 10 that converts it temporarily into a sous-vide cooker.

## Patentansprüche

1. Zubehörteil (70) für einen beheizten Standmixer (10), das dafür konfiguriert ist, den Standmixer vorübergehend für das Durchführen von Vakuumgarvorgängen anzupassen, wobei das Zubehörteil ein Kopplungsmittel (72) umfasst, wodurch das Zubehörteil (70) leicht an den Standmixer (10) gekoppelt und von diesem entfernt werden kann, wobei das Kopplungsmittel (72) eine Welle (74) und ein Mittel zum Koppeln der Welle mit einem Antriebskopf (60) des Standmixers (10) aufweist, um von diesem einen Drehantrieb zu erhalten, wobei das Zubehörteil (70) ferner einen oder mehrere Arme (80) umfasst, die von dem Bereich der genannten Welle (74) strahlenförmig nach außen gerichtet sind, wobei der oder jeder der genannten Strahlungsarme (80) dafür konfiguriert ist, vakuumverpackte Lebensmittel zu halten, um als Paddel zu wirken, wodurch eine Rührwirkung erzeugt wird.

2. Zubehörteil nach Anspruch 1, wobei die Welle (74) hohl ist und dafür konfiguriert ist, eng über einen herabhängenden Stift (66) zu passen, der einen Teil des genannten Antriebskopfs (60) bildet.

3. Zubehörteil nach Anspruch 2, bei dem ein Sicherungsmittel vorgesehen ist, um die zuverlässige Aufhängung des Zubehörteils (70) von dem genannten herabhängenden Stift (66) zu gewährleisten.

4. Zubehörteil nach Anspruch 3, wobei das genannte Sicherungsmittel ein elastisches Mittel umfasst, das in der Hohlwelle (74) des Zubehörteils vorgesehen ist und dazu gezwungen wird, fest um den Stift (66) zu passen und gegen diesen zu drücken, wobei das genannte Sicherungsmittel vorzugsweise magnetisches Material enthält.

5. Zubehörteil nach einem der Ansprüche 1 bis 4, das fünf der genannten Arme (80) umfasst.

6. Zubehörteil nach einem der Ansprüche 1 bis 5, wobei der oder die genannten Strahlungsarme (80) so geformt ist bzw. sind, dass sie der inneren Seitenwandkrümmung einer Schüssel (30) des beheizten Standmixers folgen, und sich oben und unten am Zubehörteil (70) treffen, um eine geschlossene Schleife zu bilden.

7. Zubehörteil nach Anspruch 6, wobei der oder jeder der genannten Strahlungsarme (80) nahe seinem unteren Ende mit einem Paar von Teilseitenwänden (86, 88) versehen ist, die als Taschen oder Gestelle für vakuumverpackte Lebensmittel konfiguriert sind, wobei die Wände und die darin gelagerten Lebensmittelverpackungen als Paddel wirken, wenn sich das Zubehörteil (70) in einer in der Schüssel (30) gehaltenen Flüssigkeit dreht, wodurch eine Rührwirkung erzeugt wird, die ausreicht, um eine im wesentlichen gleichmäßige Temperatur in der gesamten Flüssigkeit aufrechtzuerhalten.

8. Zubehörteil nach einem der Ansprüche 1 bis 5, wobei das Ende des oder jedes der genannten Strahlungsarme (80) eine jeweilige herabhängende Klammer (102) trägt, an der eine Lebensmittelverpackung aufgehängt werden kann, wobei die Lebensmittelverpackungen die paddelartige Wirkung liefern, die erforderlich ist, um die Flüssigkeit in der Schüssel zu rühren, wenn das Zubehörteil (70) darin gedreht wird.

9. Zubehörteil nach einem der Ansprüche 1 bis 8, wobei die Arme (80) des Zubehörteils faltbar konfiguriert sind, wodurch ein Zubehörteil (70) bereitgestellt wird, das zur Aufbewahrung leicht kompakt gemacht werden kann.

10. Zubehörteil nach einem der vorhergehenden Ansprüche, der ferner einen Temperatursensor (82a) umfasst.

11. Standmixer (10) der Folgendes aufweist: eine Schüssel (30), einen Boden (20) zum Tragen einer Schüssel (30), einen aufrechten Abschnitt (40) und ein Kopfteil (50), das von dem aufrechten Abschnitt (40) getragen wird und über der Basis (20) angeordnet ist, wobei der Kopfteil (50) einen Antriebsauslass (60) trägt, der nach unten in Richtung der Basis (20) weist, und wobei der Standmixer (10) mit Mitteln zum Erwärmen des Inhalts der Schüssel und einem Zubehörteil (70) nach einem der vorhergehenden Ansprüche versehen ist, umfassend ein Stützelement (80), das vom Kopfteil (50) angetrieben und von diesem in die Schüssel (30) gehängt werden kann, um verpackte Lebensmittel zu transportieren, die in der Flüssigkeit gekocht werden sollen, die in der Schüssel (30) enthalten ist, wobei das verpackte Lebensmittel wirksam ist, wenn das Zubehörteil (70) gedreht wird, um die Flüssigkeit in der Schüssel (30) zu rühren, um eine gewünschte Temperatur darin aufrechtzuerhalten.

12. Standmixer nach Anspruch 11, wobei die Schüssel (30) mit einem Deckel (90) versehen ist, der mit einer zentralen Öffnung (92) ausgebildet ist, um die Antriebsverbindung mit dem Zubehörteil (70) aufzunehmen, und vorzugsweise wobei der Deckel ferner mit einer versetzten Öffnung versehen ist, durch die während des Betriebs des Standmixers (10) Wasser oder eine andere Flüssigkeit zugegeben werden kann.

13. Standmixer nach Anspruch 11 oder 12, der ferner eine Vakuumpumpe umfasst, die dafür ausgelegt ist, von einem Hochgeschwindigkeitsmixerantriebsauslass angetrieben zu werden, der an dem Mischer vorgesehen ist, und zum Evakuieren von Umhüllungen, die Lebensmittel enthalten, als Vorbereitung für das Vakuumgaren konfiguriert ist.

14. Standmixer nach Anspruch 11 oder 12, wobei der Standmixer einen Auslass aufweist, der entweder zur direkten Verwendung als Sauganschluss oder als maßgeschneiderter Antrieb für eine Vakuumpumpe konfiguriert ist, um Umhüllungen mit Lebensmitteln für das Vakuumgaren zu evakuieren.

15. Beheizter Standmixer (10) mit mindestens einem Zubehörteil (70) nach einem der Ansprüche 1 bis 10, das ihn vorübergehend in ein Vakuumgargerät umwandelt.

## Revendications

1. Accessoire (70) pour un batteur sur socle chauffant (10) configuré pour adapter temporairement le batteur sur socle pour réaliser une cuisson sous vide, l'accessoire comprenant un moyen d'accouplement (72) de sorte que l'accessoire (70) puisse être facilement accouplé au batteur sur socle (10) et être séparé de celui-ci, le moyen d'accouplement (72) comprenant un arbre (74) et un moyen permettant d'accoupler l'arbre à une tête d'entraînement (60) du batteur sur socle (10) de manière à en récupérer l'entraînement en rotation, l'accessoire (70) comprenant en outre un ou plusieurs bras (80) s'étendant vers l'extérieur à partir de la région dudit arbre (74), le bras ou chacun desdits bras en extension (80) étant configuré pour supporter des aliments emballés sous vide pour agir en guise d'ailettes de manière à créer une action d'agitation.

2. Accessoire selon la revendication 1, dans lequel l'arbre (74) est creux et configuré pour s'ajuster serré sur une broche dépendante (66) faisant partie de ladite tête d'entraînement (60).

3. Accessoire selon la revendication 2, dans lequel des moyens de fixation sont fournis pour garantir la suspension fiable de la fixation (70) à ladite broche dépendante (66).

4. Accessoire selon la revendication 3, dans lequel ledit moyen de fixation comprend un moyen élastique situé dans l'arbre creux (74) de l'accessoire et contraint pour s'ajuster serré autour de la broche (66) et pour exercer une pression contre celle-ci, ledit moyen de fixation comprenant de préférence un matériau magnétique.

5. Accessoire selon l'une quelconque des revendications 1 à 4, comprenant cinq desdits bras (80).

6. Accessoire selon l'une quelconque des revendications 1 à 5, dans lequel ledit ou lesdits bras en extension (80) présentent une forme qui suit la courbure des parois latérales internes d'un bol (30) du batteur sur socle chauffant, et se rencontrent en haut et en bas de l'accessoire (70) pour former une boucle fermée.

7. Accessoire selon la revendication 6, dans lequel le bras ou chacun desdits bras en extension (80) est muni, à proximité de son extrémité inférieure, d'une paire de parois latérales partielles (86, 88) configurées comme des poches ou des paniers pour supporter des aliments emballés sous vide, de sorte que les parois et les emballages alimentaires qui y sont stockés agissent comme des ailettes quand l'accessoire (70) tourne dans un liquide contenu dans le bol (30), de manière à créer une action d'agitation suffisante pour maintenir une température sensiblement uniforme dans tout le liquide.

8. Accessoire selon l'une quelconque des revendications 1 à 5, dans lequel l'extrémité du bras ou de chacun desdits bras en extension (80) supporte une pince dépendante (102) respective, de laquelle un emballage alimentaire peut être suspendu, de sorte que les emballages alimentaires assurent l'action similaire à celle d'ailettes, nécessaire pour agiter le liquide dans le bol quand l'accessoire (70) y est en rotation.

9. Accessoire selon l'une quelconque des revendications 1 à 8, dans lequel les bras (80) de l'accessoire sont configurés pour être pliables, de manière à fournir un accessoire (70) qui peut être facilement rendu compact en vue de son entreposage.

10. Accessoire selon l'une quelconque des revendications précédentes, comprenant en outre un capteur de température (82a).

11. Batteur sur socle (10), comprenant : un bol (30), une base (20) pour supporter un bol (30), une section verticale (40) et une tête (50) supportée par la section verticale (40) et chevauchant la base (20), la tête (50) supportant une sortie d'entraînement (60) orientée vers le bas vers la base (20), et le batteur sur socle (10) étant muni d'un moyen pour chauffer un contenu du bol et un accessoire (70) selon l'une quelconque des revendications précédentes, comprenant un élément de support (80), pouvant être entraîné par la tête (50) et pouvant en être suspendu dans le bol (30), pour supporter des produits alimentaires emballés destinés à être cuits dans un liquide contenu dans le bol (30), le produit alimentaire permettant, quand l'accessoire (70) est en rotation, d'agiter le liquide dans le bol (30) pour y maintenir une température souhaitée.

12. Batteur sur socle selon la revendication 11, dans lequel le bol (30) est muni d'un couvercle (90) formé avec une ouverture centrale (92) pour recevoir la connexion d'entraînement à l'accessoire (70), et de préférence dans lequel le couvercle est en outre formé avec une ouverture décalée par laquelle de l'eau ou un autre liquide peut être ajouté pendant le fonctionnement du batteur sur socle (10).

13. Batteur sur socle selon la revendication 11 ou 12, comprenant en outre une pompe à vide conçu pour être entraînée par une sortie d'entraînement de mélangeur à grande vitesse située sur le batteur et configurée pour évacuer des enveloppes contenant des produits alimentaires en préparation pour une cuisson sous vide.

14. Batteur sur socle selon la revendication 11 ou 12, le batteur sur socle présentant une sortie configurée pour une utilisation directe en tant qu'orifice d'aspiration ou pour un entraînement sur mesure pour une pompe à vide pour évacuer des enveloppes contenant des produits alimentaires en préparation pour une cuisson sous vide.

15. Batteur sur socle chauffant (10), comprenant au moins un accessoire (70) selon l'une quelconque des revendications 1 à 10 qui le convertit temporairement en un cuiseur sous vide.
